# EUROPÄISCHE PATENTSCHRIFT

(11) **EP 1 256 512 B1**
(45) Veröffentlichungstag und Bekanntmachung des Hinweises auf die Patenterteilung: **12.04.2006**
(21) Anmeldenummer: 02009537.8
(22) Anmeldetag: 26.04.2002
(51) Int. Cl.: B62D 29/00

(54) **Verstärkungselement für einen Hohlkörper, insbesondere für einen Fahrzeugkarosserieholm**
Reinforcing element for a hollow object, especially a beam for a motor vehicle
Elément de renforcement d'un corps creux, notamment poutre de véhicule automobile

(30) Priorität: 02.05.2001 DE 10121378
(43) Veröffentlichungstag der Anmeldung: 13.11.2002
(73) Patentinhaber: ADAM OPEL AG, 65423 Rüsselsheim (DE)
(72) Erfinder: Klein, Michael, Dipl.-Ing., 65428 Rüsselsheim (DE); Lapesch, Peter, Ing., 64367 Mühltal (DE); Schönig, Horst, 65439 Flörsheim (DE); Schütt, Karl-Peter, Dipl.-Ing., 65428 Rüsselsheim (DE); Teske, Lothar, Dipl.-Ing., 63743 Aschaffenburg (DE); Haase, Martin, 55126 Mainz (DE); Stein, Michael, 85244 Röhrmoos (DE)

(56) Entgegenhaltungen:
- DE-A- 19 858 903
- US-A- 4 269 890
- US-A- 5 631 027
- US-A- 5 866 052

## Beschreibung

Die Erfindung bezieht sich auf ein Verstärkungselement für einen Hohlkörper, insbesondere für einen Fahrzeugkarosserieholm, gemäß dem Oberbegriff des Anspruchs 1.

Die Karosserie eines Fahrzeuges soll möglichst leicht sein und trotzdem eine ausreichende Steifigkeit aufweisen, um z. B. gute fahrdynamische Werte erzielen zu können. Das Fahrverhalten eines Fahrzeuges wird nämlich nicht unerheblich z. B. von einer ausreichenden Verwindungssteifigkeit der Karosserie bestimmt. Außerdem müssen bestimmte Bereiche der Karosserie, z. B. die Teile, die die Fahrgastzelle formen, so widerstandsfähig sein, dass bei Unfällen für die Insassen ein genügend großer Überlebensraum verbleibt. Kritisch ist hier insbesondere der Bereich der B-Säule und seine Anbindung an den oberen bzw. unteren Seitenholm. Für diesen Bereich wurden schon die unterschiedlichsten Vorschläge unterbreitet, um mit einfachen Mitteln bei einer Seitenkollision Intrusionen der Seitenwand in die Fahrgastzelle zu unterbinden.

So wird in der DE 198 58 903 A1 ein Verstärkungselement vorgeschlagen. Dieses Verstärkungselement besteht aus einem Träger und einer damit verbundenen aufschäumbaren Masse, wobei diese den Träger umgibt und in einer Menge vorliegt, die es erlaubt, den Spalt zwischen dem Träger und dem Hohlkörper zumindest in ein oder mehreren Abschnitten nahezu bzw. vollständig durch Aufschäumen der Masse auszufüllen.

Die Masse schäumt unter Hitzeeinwirkung auf. Das Aufschäumen kann daher bei einem sowieso notwendigen Erwärmungsprozess beim Grundieren bzw. Lackieren der Karosserie erfolgen. Die aufgeschäumte Masse geht dabei eine innige Verbindung sowohl mit dem Träger als auch mit dem Karosserieholm ein. Beim Abkühlen zieht sie sich ein wenig zusammen. Dies kann zur Folge haben, dass das Blech des Holmes bereichsweise nach innen gezogen wird. Dieser Effekt ist zwar nur gering und hat keinen Einfluss auf die Steifigkeit bzw. Tragfähigkeit des Holmes. Unter ästhetischen Gesichtspunkten können die entstehenden Dellen zumindest dann nicht akzeptiert werden, wenn sie sich beim fertig montierten Fahrzeug im sichtbaren Bereich des Holms befinden.

Um dieses zu verhindern wird vorgeschlagen, dass zwischen der Masse und der der Innenwand des Hohlkörpers zugewandten Seite der Masse abschnittsweise eine Separatorschicht vorhanden ist, die die chemische und/oder mechanische Verbindung der aufgeschäumten Masse mit der Wand des Hohlkörpers verhindert.

Als aufzuschäumende Masse haben sich organische Materialien bewährt, die unter Temperatureinfluss zu einem Strukturschaum aufquellen und aushärten. Hierbei handelt es sich um einen expansionsfähigen synthetischen Kautschuk, insbesondere um eine mit einer Amino-Verbindung behandelte feste Zusammensetzung auf Epoxidbasis, der verschiedene Modifizierer, insbesondere Copolymere auf Äthylen-Basis zugesetzt sind. In dem Material befindet sich weiterhin eine Verbindung, die bei einer Erwärmung Stickstoff freigibt.

Dieses Material ist im Grundzustand fest genug, um z. B. von einem Roboter gehandhabt zu werden, ohne dass eine Formänderung auftritt. Es ist außerdem leicht zu verarbeiten und kann in einfacher Weise mit dem Träger z. B. durch Kleben verbunden werden.

Das Material hat die Eigenschaft, bei Hitzeeinwirkung (ca. 150 °C) aufzuschäumen und auszuhärten. Es entsteht ein Schaum mit geschlossenen Zellen, in denen sich der freigesetzte Stickstoff befindet. Dies ermöglicht es, insbesondere im Bereich des Karosseriebaus das folgende Verfahren anzuwenden, um einen Hohlkörper bzw. einen Karosserieholm mit einem derartigen Verstärkungselement zu versehen.

Karosserieholme sind in der Regel aus zwei Halbschalen hergestellt. Das Verfahren besteht darin, den vom aufzuschäumenden Material ummantelten Träger in die eine Halbschale einzulegen, wobei sich durch die gewählte Außenkontur der aufzuschäumenden Masse eine Lagefixierung ergibt. Dann wird der Holm durch die andere Schale geschlossen und die beiden Schalen miteinander verschweißt. Die Lagefixierung gewährleistet, dass der Holm frei bewegt werden kann, ohne dass sich das Verstärkungselement im Holm verschiebt oder verdreht.

Der so vorbereitete Holm wird Teil einer Fahrzeugkarosserie, die, nachdem sie vollständig aufgebaut ist, im Tauchverfahren beschichtet wird. Zum Trocknen und Aushärten der Beschichtung wird die Karosserie in einen Ofen verbracht. Die dort herrschende Temperatur bewirkt, dass das Material aufschäumt und, wie oben erläutert, den Zwischenraum zwischen Träger und Holm im gewünschten Maße ausfüllt. Dabei bildet der ausgehärtete Schaum eine widerstandsfähige Ummantelung des Trägers. Dadurch ergibt sich eine innige Verbindung zwischen dem Träger und dem Holm, der nun sowohl durch den vom Schaum fixierten Träger als auch durch den Schaum selbst versteift ist.

Die innige durch den Schaum vermittelte Verbindung zwischen dem Träger und dem Holm wird aber an den Stellen unterbrochen, an denen zuvor die Separatorschicht aufgebracht worden ist. Wenn sich der Schaum bzw. der Träger in der Abkühlphase zusammenzieht, löst sich der Schaum von der Innenwand des Hohlkörpers, so dass nicht mehr die Gefahr besteht, dass die Außenwand des Karosserieholms nach innen gezogen wird.

Damit trotz allem eine feste Struktur entsteht, reicht es aus, wenn diese Unterbrechung der Verbindung an einigen ausgewählten Stellen erfolgt, und zwar insbesondere in den Bereichen, in denen der in eine Fahrzeugkarosserie eingebaute Holm von außen sichtbar ist.

Die Separatorschicht wird vorzugsweise von einer Halbschale aus Kunststoff gebildet, die sich in Längsrichtung des Holms erstreckt und die aufschäumbare Masse über einen begrenzten Winkelbereich des Verstärkungselementumfanges abdeckt.

An ihren Enden ist die Schale nach innen abgekantet. Auf diese Weise soll verhindert werden, dass die Masse seitlich unter der Separatorschicht hervorquillt und in Kontakt mit dem Holm treten kann.

Im Folgenden soll anhand eines Ausführungsbeispiels die Erfindung näher erläutert werden. Dazu zeigen:
- Fig. 1: ein Verstärkungselement vor dem Auf- schäumen mit einem Separatorteil in Form einer Halbschale und
- Fig. 2: das Verstärkungselement im Holm unmittelbar nach dem Aufschäumen der Masse und nach ihrer Abkühlung

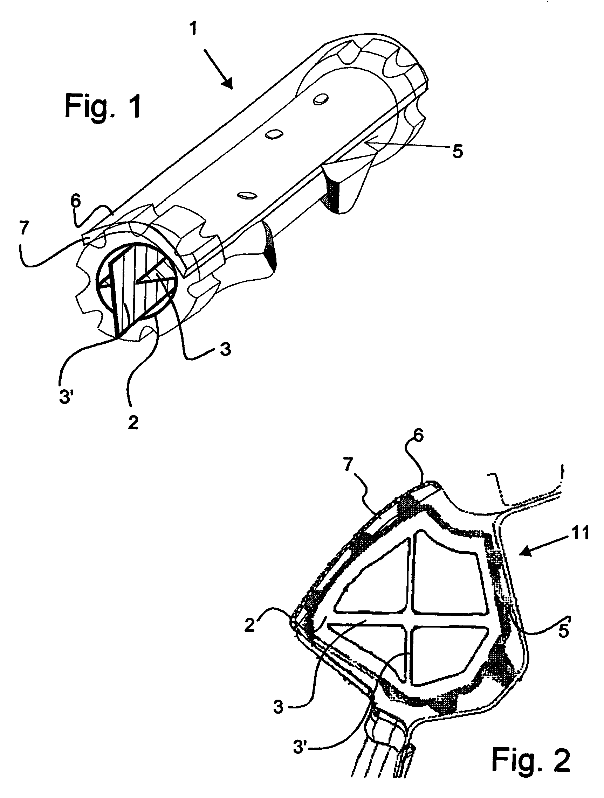

Zunächst wird auf die Fig. 1 Bezug genommen. Das Verstärkungselement 1 besteht aus einem Rohr 2, das als Träger für eine aufschäumbare Masse 5 fungiert. Im Rohr 2 befinden sich Verstärkungsbleche 3, 3' zur Aussteifung des Rohres. Diese können aus einem dünnen Metallblech hergestellt sein; Ausführungen in Kunststoff, z. B. Polyamid sind aber auch denkbar. Zumindest ein Blech 3' ist nach außen verlängert und dient als Griff für einen Automaten.

Das Rohr 2 ist über seinen ganzen Umfang und seine ganze Länge mit einer aufschäumbaren Masse 5 umkleidet. Hierbei handelt es sich um ein Material bzw. eine Materialkomposition, das bzw. die unter Einwirkung von Hitze aufschäumt und einen relativ leichten aber dennoch stabilen Strukturschaum bildet. Aber schon die nicht aufgeschäumte Masse 5 weist eine ausreichende Festigkeit auf, so dass das Verstärkungselement 1 problemlos gehandhabt werden kann.

Die Verteilung der Masse 5 um das Rohr 2 der jeweils benötigten Menge, um den ggf. in der Größe variierenden Zwischenraum zwischen Rohr 2 und Holm lokal auszufüllen. Außerdem soll eine bestimmte Menge des aufgeschäumten Materials in evtl. vorhandene Seitenholme eindringen können, um den vom Holm und Seitenholm gebildeten Knoten optimal zu verstärken.

An der Außenseite der aufschäumbaren Masse 5 befindet sich ein Separatorteil 6 aus Kunststoff, das auf die Masse 5 aufgeklebt ist. Das Separatorteil 6 hat die Form einer Halbschale und erstreckt sich über die gesamte Länge des Rohres 2 und bildet eine Separatorschicht. Zumindest seine Außenkontur entspricht der Kontur der Innenwand des Holms, so dass sich das Separatorteil flächig an die Innenwand anlegen kann. Es deckt dabei den Bereich des Holms ab, dessen Außenbereich später beim zusammengebauten Fahrzeug sichtbar ist. An den Rohrenden weist das Separatorteil 6 Abkantungen 7 auf, die verhindern, das die Masse seitlich hervortritt und unter Umgehung des Separatorteils 6 Kontakt mit der Innenwand des Holms erlangen.

Wie schon erläutert wird ein solches Verstärkungselement 1 in die eine Halbschale des Holms eingelegt. Anschließend wird der Holm durch die andere Halbschale geschlossen, wobei die beiden Schalen miteinander verschweißt werden. Die Aufschäumung und Aushärtung erfolgt in einem Ofen, in den die Karosserie, nachdem sie in einem Beschichtungstauchbad war, gebracht wird, um die Beschichtung auszuhärten und zu trocknen. Bei der im Ofen herrschenden Temperatur von ca. 150 - 180 °C schäumt das entsprechend ausgewählte Material so auf, dass der Zwischenraum zwischen Rohr und Holm vollständig ausgefüllt wird.

Fig. 2 zeigt die Situation unmittelbar vor dem Aufschäumen der Masse. Je nachdem welche Menge eingebracht worden ist, wird der gesamte Spalt zwischen Träger 2 und Holm 11 ausgefüllt. Das Separatorteil 6 liegt danach an der Innenwand des Holmes 11 an. Nach dem Abkühlen zieht sich der Schaum zusammen.

Da an den Stellen, an denen sich das Separatorteil 6 befindet, keine Verbindung zwischen dem Schaum und dem Holm 11 vorhanden ist, kann sich hier der Schaum zurückziehen, ohne dabei Zugkräfte auf den Holm 11 auszuüben. Dementsprechend können sich an den Stellen, die vom Separatorteil 6 abgedeckt sind, keine Dellen im Holm ausbilden. Zwischen dem Separatorteil und dem Holm wird sich ein kaum wahrnehmbarer Spalt ausbilden, dessen Existenz aber keinen Einfluss auf die Steifigkeit des mit dem Verstärkungselement 1 verstärkten Holms 11 ausübt.

In besonderen Fällen ist auch eine Separatorschicht denkbar, die von einer Trennfolie gebildet ist, die die aufschäumbare Masse schlauchartig umgibt.

### Bezugszeichenliste

- 1: Verstärkungselement
- 2: Träger
- 3, 3': Verstärkungsbleche
- 5: aufschäumbare Masse
- 6: Separatorschicht
- 7: Abkantung
- 11: Holm

## Patentansprüche

1. Verstärkungselement für einen Hohlkörper, insbesondere für einen Fahrzeugkarosserieholm, mit einem Träger (2) und einer damit verbundenen aufschäumbaren Masse (5), wobei das Verstärkungselement (1) in den Hohlkörper (11) einbringbar ist, die aufschäumbare Masse (5) den Träger umgibt und in einer Menge vorliegt, die es erlaubt, den Spalt zwischen dem Träger (2) und dem Hohlkörper (11) zumindest in ein oder mehreren Abschnitten nahezu bzw. vollständig auszufüllen, **dadurch gekennzeichnet, dass** an der der Innenwand des Hohlkörpers (11) zugewandten Seite der Masse (5) abschnittsweise eine Separatorschicht (6) vorhanden ist, die die chemisch und/oder mechanische Verbindung der ausgeschäumten Masse (5) mit der Wand des Hohlkörpers (11) verhindert.

2. Verstärkungselement nach Anspruch 1, **dadurch gekennzeichnet, dass** der Träger (2) hohl ausgeführt ist.

3. Verstärkungselement nach Anspruch 3, **dadurch gekennzeichnet, dass** der Träger (2) aus Kunststoff hergestellt ist.

4. Verstärkungselement nach einem der vorhergehenden Ansprüche, **dadurch gekennzeichnet, dass** die Separatorschicht (6) von einer hochtemperaturfesten Halbschale gebildet ist, deren Ausdehnung in Umfangsrichtung im Wesentlichen der Ausdehnung des sichtbaren Bereichs des Holms (11) entspricht.

5. Verstärkungselement nach einem der vorhergehenden Ansprüche, **dadurch gekennzeichnet, dass** die Separatorschicht (6) sich von einem zum anderen Ende des Trägers (2) erstreckt und an ihren Enden nach innen weisende Abkantungen (7) aufweist.

6. Verstärkungselement nach einem der vorhergehenden Ansprüche, **dadurch gekennzeichnet, dass** die Separatorschicht (6) von einer hochtemperaturfesten Trennfolie gebildet ist.

7. Verstärkungselement nach Anspruch 6, **dadurch gekennzeichnet, dass** die Trennfolie den Träger (2) bzw. die aufschäumbare Masse (5) schlauchartig umgibt.

## Claims

1. Reinforcing element for a hollow body, in particular for a beam of a motor vehicle body, with a support (2) and a foamable mass (5) connected thereto, wherein the reinforcing element (1) can be inserted into the hollow body (11), the foamable mass (5) encloses the support (2) and is provided in a quantity, which allows the gap between the support (2) and the hollow body (11) to be almost or completely filled at least in one or more sections, **characterised in that** on the side of the mass (5) facing the inside wall of the hollow body (11), a separator layer (6) is provided at least in sections, which prevents the foamed mass (5) from chemically and/or mechanically bonding with the wall of the hollow body (11).

2. Reinforcing element according to Claim 1, **characterised in that** the support (2) is hollow.

3. Reinforcing element according to Claim 3, **characterised in that** the support (2) is made from plastic.

4. Reinforcing element according to one of the preceding claims, **characterised in that** the separator layer (6) is formed from a high temperature-resistant half shell, the extent of which in the peripheral direction corresponds substantially to the extent of the visible region of the beam (11).

5. Reinforcing element according to one of the preceding claims, **characterised in that** the separator layer (6) extends from one end of the support (2) to the other and has inwardly directed bent edges (7) at its ends.

6. Reinforcing element according to one of the preceding claims, **characterised in that** the separator layer (6) is formed by a high temperature-resistant separating foil.

7. Reinforcing element according to Claim 6, **characterised in that** the separating foil encloses the support (2) or the foamable mass (5) in the manner of a tube.

## Revendications

1. Elément de renforcement d'un corps creux, en particulier pour une poutre de carrosserie de véhicule, avec un support (2) et une masse (5) lui étant reliée et susceptible d'être fabriquée en matière alvéolaire, l'élément de renforcement (1) étant susceptible d'être introduit dans le corps creux (11), la masse (5) susceptible d'être fabriquée en matière alvéolaire entourant le support et se présentant en une quantité permettant de remplir, à peu près ou complètement, l'intervalle existant entre le support (2) et le corps creux (11), au moins en un ou plusieurs tronçons, **caractérisé en ce que**, sur la face tournée vers la paroi intérieure du corps creux (11), de la masse (5), est prévue par tronçons une couche séparatrice (6) empêchant la liaison chimique et/ou mécanique de la masse (5) rendue alvéolaire avec la paroi du corps creux (11).

2. Elément de renforcement selon la revendication 1, **caractérisé en ce que** le support (2) est réalisé creux.

3. Elément de renforcement selon la revendication 3, **caractérisé en ce que** le support (2) est fabriqué en matière synthétique.

4. Elément de renforcement selon l'une des revendications précédentes, **caractérisé en ce que** la couche séparatrice (6) est formée par une demi coque résistante aux hautes températures, dont l'étendue en direction périphérique correspond sensiblement à l'étendue de la zone visible de la poutre (11).

5. Elément de renforcement selon l'une des revendications précédentes, **caractérisé en ce que** la couche séparatrice (6) s'étend d'une extrémité à l'autre du support (2) et présente, à ses extrémités, des pliages (7) tournés vers l'intérieur.

6. Elément de renforcement selon l'une des revendications précédentes, **caractérisé en ce que** la couche séparatrice (6) est formée par une feuille de séparation résistante aux hautes températures.

7. Elément de renforcement selon la revendication 6, **caractérisé en ce que** la feuille de séparation entoure à la façon d'un tube flexible (2) ou la masse (5) susceptible d'être fabriquée en matière alvéolaire.
